# EUROPEAN PATENT SPECIFICATION

(11) **EP 3 711 985 B1**
(45) Date of publication and mention of the grant of the patent: **10.05.2023**
(21) Application number: 19305322.0
(22) Date of filing: 18.03.2019
(51) Int. Cl.: B60H 1/32

(54) **GRILL FOR TRANSPORT REFRIGERATION UNIT**
GRILL FÜR TRANSPORTKÜHLEINHEIT
GRILLE POUR UNITÉ DE RÉFRIGÉRATION DE TRANSPORT

(43) Date of publication of application: 23.09.2020
(73) Proprietor: Carrier Corporation, Palm Beach Gardens, FL 33418 (US)
(72) Inventor: Renault, Loic, 76520 Franqueville Saint Pierre (FR)
(74) Representative: Dehns

(56) References cited:
- EP-A1- 2 944 552
- KR-A- 20150 071 262
- KR-B1- 101 240 727
- US-A- 4 567 734
- US-A- 5 317 880
- US-A1- 2006 095 178
- US-A1- 2011 048 691
- US-A1- 2014 170 960
- US-A1- 2014 273 806
- US-A1- 2016 207 394

## Description

The present invention relates to a cover assembly for a transport refrigeration unit. Embodiments of the current disclosure relate generally to transport refrigeration units and, more particularly, to a grill of a transport refrigeration unit.

A typical transport refrigeration unit mounting on the front face of a tractor trailer unit includes a one piece, self-contained fully refrigerant charged, prewired, refrigerant/heating unit powered by a diesel engine. In such a design the evaporator section fits into a rectangular opening in the upper portion of the trailer front wall. When installed, the evaporator section is located inside the trailer; and the condensing section is outside at the front of the trailer. The condensing section consists of an engine-compressor drive package, condenser fan, condenser coil, radiator coil, control panel, relay module, refrigerant controls, piping, wiring and associated components.

Also supported by the structural framework is an outer cover, which includes the necessary air inlet and outlet openings for air cooling of the condenser coil, and doors which may be opened to provide access to the interior of the unit for maintenance and service.

The air inlet for cooling of the condenser coil is provided by way of a grill located at the upper, front face of the cover. Typically, the grill is composed of a durable rigid plastic material, such as for example acrylonitrile butadiene styrene (ABS) material or polyethylene or polyolefin material, and is mounted to a surrounding support structure, commonly referred to as a surround assembly, that is mounted to the framework of the refrigeration unit. In conventional practice, the grill is mounted to the surround assembly by means of a plurality of threaded fasteners arranged in spaced relationship about the periphery of the grill.

US 4567734 A discloses an air deflector unit for use on a vehicle to improve air flow relative to the vehicle.

US 5317880 A discloses an apparatus to control the air as it passes a tractor trailer combination as they travel along a road, such that the effects of air resistance may be reduced.

In accordance with a first aspect of the invention, a cover assembly of a transport refrigeration unit as claimed in claim 1 is provided.

Optionally, each of the plurality of louver members is rotatable about a respective axis between the first position and the second position.

Optionally, the inlet area is maximized when the plurality of louver members are in the first position.

Optionally, the plurality of louver members extend generally perpendicular to a surface of the surround assembly when in the first position.

Optionally, the inlet area is minimized when the plurality of louver members are in the second position.

Optionally, the plurality of louver members extend generally parallel to a surface of the surround assembly when in the first position.

Optionally, the plurality of openings are fully sealed when the plurality of louver members are in the second position.

Optionally, between about 10% and 20% of the central opening is arranged in fluid communication with the plurality of openings when the plurality of louver members are in the second position.

Optionally, the grill further comprises a central support and a first plurality of louver members extend from the central support in a first direction and a second plurality of louver members extend from the central support in a second direction.

Viewed from a second aspect, the invention provides a transport refrigeration unit as claimed in claim 10.

Optionally, the inlet area is variable in response to a demand of the transport refrigeration unit.

Optionally, the cover assembly includes a grill having a plurality of louver members, the plurality of louver members being movable to vary the inlet area.

According to another aspect, the invention provides a method of operating a transport refrigeration unit as claimed in claim 12.

Optionally, varying the inlet area of the grill further comprises moving at least one of the plurality of louver members between a first position and a second position.

Optionally, moving the at least one of the plurality of louver members includes operating an actuation mechanism coupled to the at least one of the plurality of louver members.

The method may comprise communicating a commanded position of the at least one of the plurality of louver members from a controller to the actuation mechanism.

Optionally, varying the inlet area of the grill further comprises moving the plurality of louver members toward an open position to increase the inlet area and an airflow provided to the transport refrigeration unit in response to an increase in demand.

Optionally, varying the inlet area of the grill further comprises moving the plurality of louver members toward a closed position to decrease the inlet area and an airflow provided to the transport refrigeration unit in response to a decrease in demand.

Additional features and advantages are realized through the techniques of the embodiments herein. Other embodiments are described in detail herein and are considered a part of the claims. For a better understanding of the embodiments with the advantages and the features, refer to the description and to the drawings.

The following descriptions should not be considered limiting in any way. With reference to the accompanying drawings, like elements are numbered alike:
FIG. 1 is a side view of an example of a transport refrigeration trailer;
FIG. 2 is a perspective view of an example of a transport refrigeration unit;
FIG. 3A is a front view of a grill of a cover assembly of a transport refrigeration unit in a first position;
FIG. 3B is a side view of the louver members of the cover assembly of FIG. 3A;
FIG. 4A is a front view of a grill of a cover assembly of a transport refrigeration unit in a second position;
FIG. 4B is a side view of the louver members of the cover assembly of FIG. 4A; and
FIG. 5 is a schematic diagram of a control system of the transport refrigeration unit.

A detailed description of one or more embodiments of the disclosed apparatus and method are presented herein by way of exemplification and not limitation with reference to the Figures.

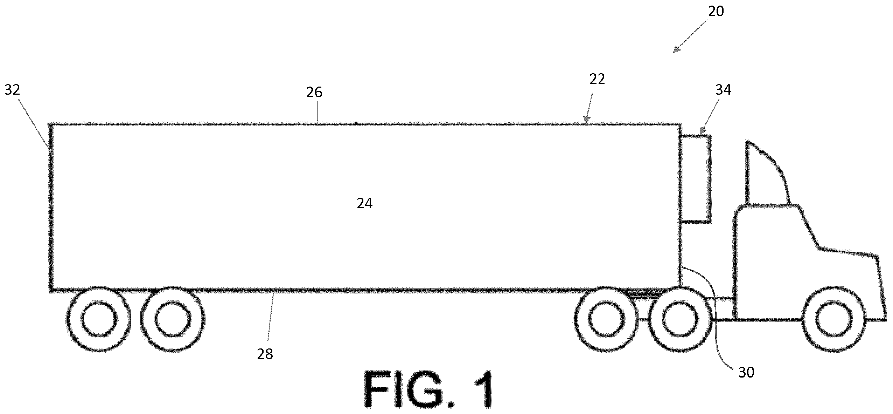

With reference now to FIG. 1, an example of a transport refrigeration trailer 20 for transportation of various good is illustrated. The trailer 20 has a trailer body 22 including an internal "cargo area" 24 formed by thermally insulated walls including a top wall 26, bottom wall 28, front wall 30, rear wall 32, as well as side walls (not shown). To the extent that goods within the cargo area 24 need to be kept in an air conditioned environment, such as where the goods are perishable food items for example, the trailer 20 includes a refrigeration system. In the illustrated embodiment, a transport refrigeration unit ("TRU") 34 including a refrigeration system is attached to a portion of the trailer body 22, such as the front wall 30. The TRU 34 is operable to draw heated air in from the cargo area 24, to cool the heated air, and to exhaust the cooled air back into the cargo area 24.

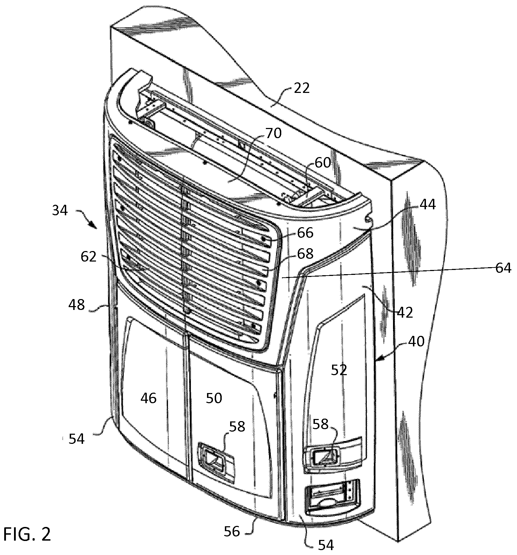

An example of a TRU 34 is illustrated in more detail in FIG. 2. For purposes of the present description the terms "roadside" and "curbside" will be used in describing various components of the refrigeration unit and its cover. As viewed in FIG. 2, the right hand side of the TRU 34 will be referred to as the roadside and the left hand side of the TRU 34 will be referred to as the curbside.

In the Figures, the TRU 34 has a cover assembly 40 including a lower cover assembly 42 and an upper cover assembly 44. The lower cover assembly 42 includes a curbside front door 46, a curbside outer door 48, a roadside front door 50, and a roadside outer door 52, all shown in their closed positions. The lower cover assembly 42 additionally includes side panels 54 and a bottom panel 56. The curbside and roadside front doors 46, 50 are vertically hinged at their respective outer edges so as to swing outwardly to open to provide a large access opening at the front of the TRU 34, thereby providing access to the inner structural components of the TRU 34, as well as some of the components of the refrigeration system itself.

The curbside and roadside outer doors 48, 52 are mounted within the respective side panels 54 and vertically hinged at their respective rear edges such that they pivot open from front to back to provide additional access openings to the interior of the TRU 34 at the sides of the unit. Latches 58 are provided for latching and unlatching the roadside front door 50 and the roadside outer door 52, respectively. The bottom panel 56 is attached to the lower cover assembly 42 for purposes of closure and to improve the aesthetics of the TRU 34.

Attachment of the TRU 34 to the trailer 20 is carried out by connection of an outer peripheral planar structural steel framework designated generally by reference numeral 60. It should be appreciated that this framework 60 is not normally visible when the unit is properly installed on a trailer 20; however for purposes of illustration, at least a portion of the structural framework is illustrated in FIG. 2. All of the component assemblies which define the outer cover of the TRU 34 are mounted to the various structural members of the framework 60.

The upper cover assembly 44 includes a front grill 62 member and a relatively flexible support structure 64, also referred to herein as the surround assembly, disposed in surrounding relationship therewith. The grill 62 is positioned in overlying relationship with a central opening 66 in the surround assembly 64 and the condenser heat exchanger located there behind (not shown). The grill 62 includes a plurality of openings 68 to facilitate air flow for efficient heat transfer to cool the condenser coil (not shown) of the TRU 34. The grill 62 may be affixed to the surround assembly 64 in any suitable manner, such as with fasteners, or via a snap fit connection for example.

A top panel 70 may be attached to the upper cover assembly 44 of the TRU 34 for purposes of closure and to improve the aesthetic of the TRU 34. It will be appreciated that the door, panel, surround assembly 64 and grill 62 are designed to cooperate to fully enclose the refrigeration system of the TRU 34 to provide protection from the environment and road hazards and to aerodynamically and aesthetically enhance the TRU 34.

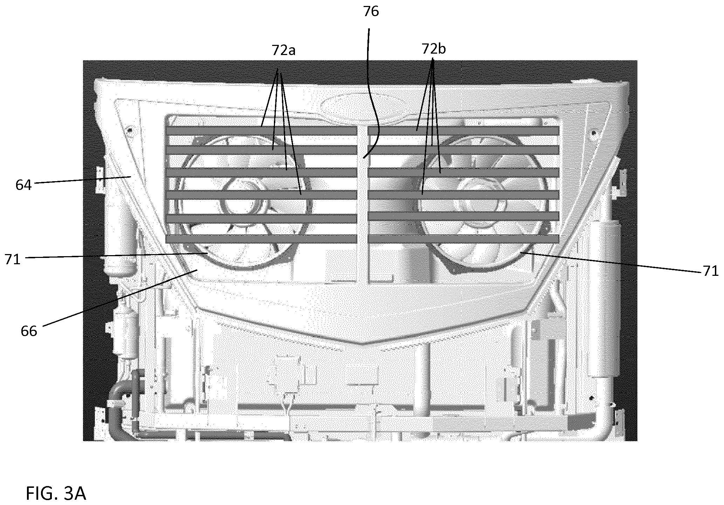

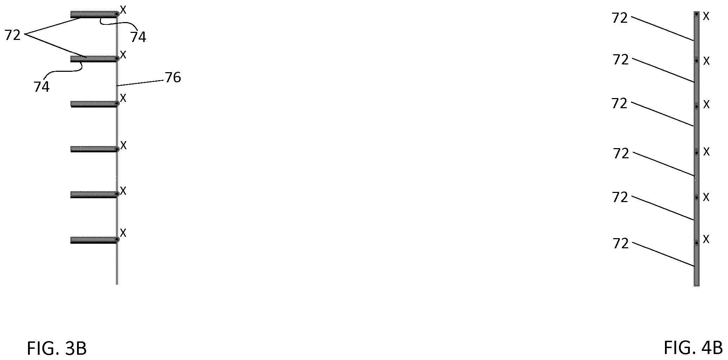

With reference now to FIGS. 3-4, an example of the front grill 62 is shown in more detail. As illustrated, the front grill 62 is shown having a generally rectangular or trapezoidal shape. In addition, the grill 62 is slightly curved from front to back, so as to wrap around the front face of the TRU 34 as shown. However, it should be understood that a grill 62 having any shape and configuration is contemplated herein.

The grill 62 includes a plurality of louver members 72 arranged in an overlapping relationship with the surround assembly 64. The louver members 72 may be made from any suitable material including but not limited to plastic and metal for example. In addition, in an embodiment, a noise deadening material 74 (see FIG. 3B), for example foam, may be mounted to a surface of the louver members 72 generally adjacent the central opening 66. In the Figures, the grill 62 includes a plurality of horizontally disposed and vertically spaced louver members 72. The plurality of louver members 72 may be substantially identical, or alternatively, may vary, such as based on the position of the louver members 72 relative to the surround assembly 64 for example. The one or more louver members 72 may extend across a full width of the central opening 66 of the surround assembly 64. However, in other arrangements, such as where the condenser unit (not shown) has two air movement devices (i.e. condenser fans) 71, at least a portion of the grill 62 may include a central support 76 and two distinct sets of louver members 72. As shown, a first set of louver members 72a extends from the central support 76 in a first direction and a second set of louver members 72b extends from the central support 76 in a second, opposite direction. Together, the first and second set of louver members 72a, 72b cooperate to span the central opening 66 of the surround assembly 64. In that case, the central support 76 may be integrally formed with, or alternatively, may be separate from the surround assembly 64.

Although in the Figures the first and second sets of louver members 72a, 72b are substantially identical, and more specifically, symmetrical about a plane defined by and extending through the central support 76, in other arrangements a configuration of the sets of louver members 72a, 72b varies. Further, it should be understood that there may be more than two sets of louver members 72 arranged to span the central opening 66 of the surround assembly 64.

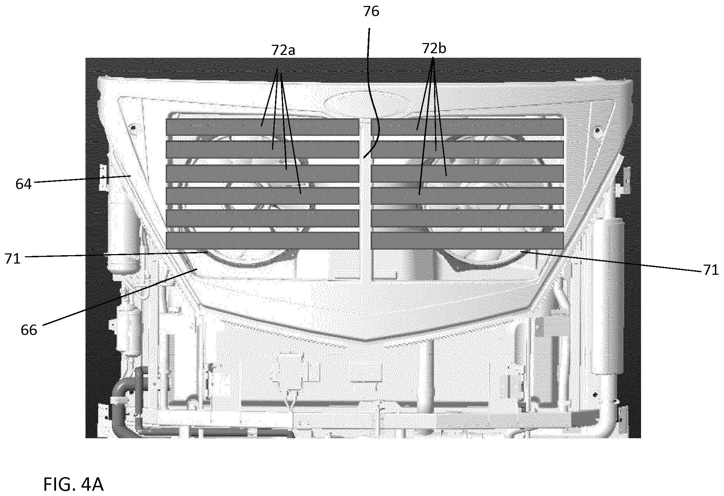

The plurality of louver members 72 of the grill 62 are movable between a first position (FIGS. 3A, 3B) and a second position (FIGS. 4A, 4B). For example, the plurality of louver members 72 may be pivotally mounted such that each of the louver members 72 is configured to rotate about a respective axis X, out of a plane of the surround assembly 64, between the first position and the second position. However, other movement of the louver members 72 is also possible. Because the plurality of openings 68 are defined between vertically adjacent louver members 72, the height of each opening 68, and therefore the cross-sectional area of each opening 68, will vary as the louver members 72 transition between the first position and the second position. The plurality of openings 68 may be considered to define a condenser inlet area arranged in fluid communication with the central opening 66. Accordingly, the condenser inlet area is variable by adjusting the position of the louver members 72.

The plurality of louver members 72 can be oriented substantially perpendicular to the surround assembly 64, and parallel to rotational axis of the condenser fans in the first position. Accordingly, when the plurality of louver members 72 are in the first position, the size of the openings 68 defined there between is configured to maximize the air flow through the central opening 66 to an adjacent condenser fan 71. It should be understood that maximum cross-sectional area defined by the openings 68 is dependent on the total number of louver members 72 and the thickness of the louver members 72.

In the second position, the plurality of louver members 72 are oriented at a non-perpendicular angle relative to the surround assembly 64. The plurality of louver members 72 may be oriented substantially parallel to the surround assembly 64 and perpendicular to the axis of the condenser fans 71 when in the second position. Depending on the spacing of the louver members 72, when in the second position, the plurality of louver members 72 may substantially seal the plurality of openings 68 to prevent a fluid flow through the central opening 66 to the condenser fans 71. However, alternatively, in the second position, between about 10%-20% of the cross-sectional area of the central opening 66 may be exposed through the openings 68 defined by the louver members 72.

It should be understood that the first and second positions described herein are intended as an example only, and any orientation of the louver members 72 may be defined as the first and second position. Further, it should be understood that the plurality of louver members 72 may be arranged at any intermediate position between the first position and the second position.

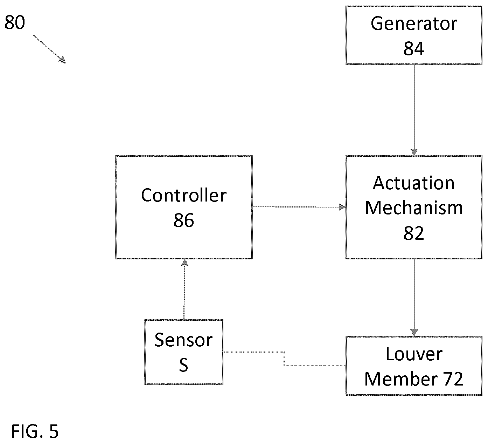

With reference now to FIG. 5, the TRU 34 additionally includes a control system 80 including one or more actuation mechanisms 82, such as an electrical motor or actuator for example, for moving the louver members 72 between the first position and the second position. Power to operate the one or more actuation mechanisms 82 may be supplied from another portion of the trailer 20, such as a generator, illustrated schematically at 84. The plurality of louver members 72 of the grill 62, or alternatively, the plurality of louver members 72 within a set may be connected to a single actuation mechanism 82. As a result, the actuation mechanism 82 is operable to move each of the plurality of louver members 72 about a respective axis X, in unison. Alternatively, the TRU 34 may include a plurality of actuation mechanisms 82, such that the position of the louver members 72 are adjusted in groups, or alternatively, individually. Accordingly, the positon of the plurality of the louver members 72 may be adjusted non-uniformly.

The control system 80 further includes a controller 86 operably coupled to the one or more actuation mechanisms 82. The controller 86 generates and sends a command to an actuation mechanism 82 indicating a desired movement and/or location of the louver members 72 associated therewith. The controller 86 may be the same controller used to control operation of the refrigeration system, or alternatively, may be different. The controller may be configured to adjust the position of the louver members 72 in response to a cooling demand of the TRU 34. For example, in high speed operation, when maximum cooling capacity of the TRU 34 is needed, the louver members 72 may be rotated to the first, fully open position, to maximize the airflow provided to the condenser unit. Maximizing the cross-sectional area of the openings 68 optimizes the cooling performance of the TRU 34. Similarly, during lower speed operation, the louver members 72 may be rotated towards the second position to reduce the cross-sectional area of the openings 68 and therefore the air flow provided to the condenser fans 71. By reducing the size of the openings 68, the noise generated by the air flow is reduced.

One or more sensors S are associated with the grill 62 or the surround assembly 64 to monitor an actual position of the louver members 72. The sensor information is communicated to the controller 86 where it is compared with the commanded position of the louver members 72, for example to determine an error value. Where the error value exceeds a predetermined threshold, the controller 86 issues a corrected command intended to compensate for the discrepancy between the actual and commanded position.

A TRU 34 as illustrated and described herein has a reduced noise output compared to existing systems. Further, the grill 62 may be adapted for use with existing systems without having to adjust the position of the condenser fans 71.

All of the component assemblies which define the outer cover of the refrigeration unit are mounted to the various structural components. In the Figures the TRU includes a curbside front door and a roadside front door. In their closed positions, the curbside front door and the roadside front door cover inner structural components of the unit as well as some of the refrigeration unit itself. These TRU additionally includes a curbside outer door and a roadside outer door. Each of the doors forming the lower portion of the cover are made from a tough, light weight composite material designed to resist rust, denting, warping, fading, or peeling of their outer finish.

In the Figures the front doors are vertically hinged at their respective outer edges to provide a large access opening at the front of the unit. The side doors are vertically hinged at their rear edges such that the pivot open from front to back. Latches are provided for latching and unlatching the front roadside door and the side roadside door, respectively.

Aspects of the embodiments are described herein with reference to flowchart illustrations, schematics, and/or block diagrams of methods, apparatus, and/or systems according to embodiments. Further, the descriptions of the various embodiments have been presented for purposes of illustration but are not intended to be exhaustive or limited to the embodiments disclosed. Many modifications and variations will be apparent to those of ordinary skill in the art without departing from the scope of the invention as defined by the claims. The terminology used herein was chosen to best explain the principles of the embodiments, the practical application or technical improvement over technologies found in the marketplace, or to enable others of ordinary skill in the art to understand the embodiments disclosed herein.

The terminology used herein is for describing particular embodiments only and is not intended to be limiting. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one more other features, integers, steps, operations, element components, and/or groups thereof.

While the preferred embodiment has been described, it will be understood that those skilled in the art, both now and in the future, may make various improvements and enhancements which fall within the scope of the claims which follow. These claims should be construed to maintain the proper protection.

## Claims

1. A cover assembly (40) of a transport refrigeration unit (34) comprising:
a surround assembly (64) having a central opening (66); and
a grill (62) positionable in overlapping relationship with the central opening (66), wherein the grill (62) includes a plurality of louver members (72) and a plurality of openings (68) are defined between the plurality of louver members (72), the plurality of openings (68) being arranged in fluid communication with the central opening (66);
wherein the plurality of openings (68) define an inlet area and the inlet area is variable; and
wherein the plurality of louver members (72) are movable between a first position and a second position;
the cover assembly (40) **characterized by** a control system (80) including:
an actuation mechanism (82) coupled to at least one of the plurality of louver members (72);
one or more sensors (S) associated with the grill (62) and configured to monitor an actual position of the plurality of louver members (72); and
a controller (86) operably coupled to the actuation mechanism (82);
wherein the controller (86) is configured to:
communicate a movement command associated with the at least one of the plurality of louver members (72) to the actuation mechanism (82);
compare the actual position of the plurality of louver members (72) with a commanded position;
determine an error value based on the comparison; and
issue a corrected commanded position when the error value exceeds a predetermined threshold.

2. The cover assembly (40) of claim 1, wherein each of the plurality of louver members (72) is rotatable about a respective axis (X) between the first position and the second position.

3. The cover assembly (40) of claim 1 or 2, wherein the inlet area is maximized when the plurality of louver members (72) are in the first position.

4. The cover assembly (40) of claim 3, wherein the plurality of louver members (72) extend generally perpendicular to a surface of the surround assembly (60) when in the first position.

5. The cover assembly (40) of any preceding claim, wherein the inlet area is minimized when the plurality of louver members (72) are in the second position.

6. The cover assembly (40) of any preceding claim, wherein the plurality of louver members (72) extend generally parallel to a surface of the surround assembly (60) when in the first position.

7. The cover assembly (40) of any preceding claim, wherein the plurality of openings (68) are fully sealed when the plurality of louver members (72) are in the second position.

8. The cover assembly (40) of any preceding claim, wherein between about 10% and 20% of the central opening (66) is arranged in fluid communication with the plurality of openings (68) when the plurality of louver members (72) are in the second position.

9. The cover assembly (40) of any preceding claim, wherein the grill (62) further comprises a central support (76) and a first plurality of louver members extend from the central support (76) in a first direction and a second plurality of louver members extend from the central support (76) in a second direction.

10. A transport refrigeration unit (34) comprising:
a condenser heat exchanger; and
a cover assembly (40) in overlying relationship with the condenser heat exchanger, wherein the cover assembly (40) defines an inlet area through which air is provided to the condenser heat exchanger, wherein the inlet area is variable,
wherein the cover assembly (40) is as defined in any preceding claim.

11. The transport refrigeration unit (34) of claim 10, wherein the inlet area is variable in response to a demand of the transport refrigeration unit (34).

12. A method of operating a transport refrigeration unit (34) comprising:
providing a surround assembly (60) having a central opening (66);
providing a grill (62) in overlapping relationship with the central opening (66), the grill (62) including a plurality of louver members (72) that define an inlet area;and
varying the inlet area of the grill (62) based on a demand of the transport refrigeration unit (34;
the method comprising using a cover assembly as defined in any of claims 1 to 9.

13. The method of claim 12, wherein varying the inlet area of the grill (62) further comprises moving the plurality of louver members (72) toward an open position to increase the inlet area and an airflow provided to the transport refrigeration unit (34) in response to an increase in demand.

14. The method of claim 12 or 13, wherein varying the inlet area of the grill (62) further comprises moving the plurality of louver members (72) toward a closed position to decrease the inlet area and an airflow provided to the transport refrigeration unit (34) in response to a decrease in demand.

## Patentansprüche

1. Abdeckanordnung (40) einer Transportkühleinheit (34), umfassend:
eine umschließende Anordnung (64), welche eine zentrale Öffnung (66) aufweist; und
ein Gitter (62), welches in überlappender Beziehung zu der zentralen Öffnung (66) positionierbar ist, wobei das Gitter (62) eine Vielzahl von Lüftungsschlitzelementen (72) beinhaltet und eine Vielzahl von Öffnungen (68) zwischen der Vielzahl von Lüftungsschlitzelementen (72) definiert sind, wobei die Vielzahl von Öffnung (68) in strömungstechnischer Kommunikation mit der zentralen Öffnung (66) angeordnet sind;
wobei die Vielzahl von Öffnungen (68) einen Einlassbereich definieren und der Einlassbereich variabel ist; und
wobei die Vielzahl von Lüftungsschlitzelementen (72) zwischen einer ersten Position und einer zweiten Position beweglich sind;
wobei die Abdeckanordnung (40) durch ein Steuerungssystem (80) gekennzeichnet ist, welches beinhaltet:
einen Betätigungsmechanismus (82), welcher an zumindest eines der Vielzahl von Lüftungsschlitzelementen (72) gekoppelt ist;
einen oder mehrere Sensoren (S), welche mit dem Gitter (62) verknüpft und konfiguriert sind, um eine tatsächliche Position der Vielzahl von Lüftungsschlitzelementen (72) zu überwachen; und
eine Steuereinheit (86), welche an den Betätigungsmechanismus (82) wirksam gekoppelt ist;
wobei die Steuereinheit (86) konfiguriert ist, um:
einen Bewegungsbefehl, welcher mit dem zumindest einen der Vielzahl von Lüftungsschlitzelementen (72) verknüpft ist, an den Betätigungsmechanismus (82) zu kommunizieren;
die tatsächliche Position der Vielzahl von Lüftungsschlitzelementen (72) mit einer befohlenen Position zu vergleichen;
auf Basis des Vergleichs einen Fehlerwert zu bestimmen; und
eine korrigierte befohlene Position auszugeben, wenn der Fehlerwert eine vorbestimmte Schwelle überschreitet.

2. Abdeckanordnung (40) nach Anspruch 1, wobei jedes der Vielzahl von Lüftungsschlitzelementen (72) rund um eine entsprechende Achse (X) zwischen der ersten Position und der zweiten Position drehbar ist.

3. Abdeckanordnung (40) nach Anspruch 1 oder 2, wobei der Einlassbereich maximiert ist, wenn die Vielzahl von Lüftungsschlitzelementen (72) sich in der ersten Position befinden.

4. Abdeckanordnung (40) nach Anspruch 3, wobei die Vielzahl von Lüftungsschlitzelementen (72) sich im Allgemeinen senkrecht zu einer Oberfläche der umschließenden Anordnung (60) erstrecken, wenn in der ersten Position.

5. Abdeckanordnung (40) nach einem der vorstehenden Ansprüche, wobei der Einlassbereich minimiert ist, wenn die Vielzahl von Lüftungsschlitzelementen (72) sich in der zweiten Position befinden.

6. Abdeckanordnung (40) nach einem der vorstehenden Ansprüche, wobei die Vielzahl von Lüftungsschlitzelementen (72) sich im Allgemeinen parallel zu einer Oberfläche der umschließenden Anordnung (60) erstrecken, wenn in der ersten Position.

7. Abdeckanordnung (40) nach einem der vorstehenden Ansprüche, wobei die Vielzahl von Öffnungen (68) vollständig abgedichtet sind, wenn die Vielzahl von Lüftungsschlitzelementen (72) sich in der zweiten Position befinden.

8. Abdeckanordnung (40) nach einem der vorstehenden Ansprüche, wobei zwischen etwa 10 % und 20 % der zentralen Öffnung (66) in strömungstechnischer Kommunikation mit der Vielzahl von Öffnungen (68) angeordnet ist, wenn die Vielzahl von Lüftungsschlitzelementen (72) sich in der zweiten Position befinden.

9. Abdeckanordnung (40) nach einem der vorstehenden Ansprüche, wobei das Gitter (62) weiter einen zentralen Träger (76) umfasst und eine erste Vielzahl von Lüftungsschlitzelementen sich von dem zentralen Träger (76) in eine erste Richtung erstreckt, und eine zweite Vielzahl von Lüftungsschlitzelementen sich von dem zentralen Träger (76) in eine zweite Richtung erstreckt.

10. Transportkühleinheit (34), umfassend:
einen Kondensator-Wärmetauscher; und
eine Abdeckanordnung (40) in überlagernder Beziehung zu dem Kondensator-Wärmetauscher, wobei die Abdeckanordnung (40) einen Einlassbereich definiert, durch welchen Luft für den Kondensator-Wärmetauscher bereitstellt wird, wobei der Einlassbereich variabel ist,
wobei die Abdeckanordnung (40) wie in einem der vorstehenden Ansprüche definiert ist.

11. Transportkühleinheit (34) nach Anspruch 10, wobei der Einlassbereich als Reaktion auf einen Bedarf der Transportkühleinheit (34) variabel ist.

12. Verfahren zum Betreiben einer Transportkühleinheit (34), umfassend:
Bereitstellen einer umschließenden Anordnung (60), welche eine zentrale Öffnung (66) aufweist;
Bereitstellen eines Gitters (62) in überlappender Beziehung zu der zentralen Öffnung (66), wobei das Gitter (62) eine Vielzahl von Lüftungsschlitzelementen (72) beinhaltet, welche einen Einlassbereich definieren; und
Variieren des Einlassbereichs des Gitters (62) auf Basis eines Bedarfs der Transportkühleinheit (34);
wobei das Verfahren Verwenden einer Abdeckanordnung wie in einem der Ansprüche 1 bis 9 definiert umfasst.

13. Verfahren nach Anspruch 12, wobei Variieren des Einlassbereichs des Gitters (62) weiter Bewegen der Vielzahl von Lüftungsschlitzelementen (72) hin zu einer offenen Position umfasst, um den Einlassbereich und einen Luftstrom, welcher für die Transportkühleinheit (34) bereitstellt wird, als Reaktion auf eine Zunahme des Bedarfs zu vergrößern.

14. Verfahren nach Anspruch 12 oder 13, wobei Variieren des Einlassbereichs des Gitters (62) weiter Bewegen der Vielzahl von Lüftungsschlitzelementen (72) hin zu einer geschlossenen Position umfasst, um den Einlassbereich und einen Luftstrom, welcher für die Transportkühleinheit (34) bereitstellt wird, als Reaktion auf eine Abnahme des Bedarfs zu verringern.

## Revendications

1. Ensemble couvercle (40) d'une unité de réfrigération de transport (34) comprenant :
un ensemble d'entourage (64) présentant une ouverture centrale (66) ; et
une grille (62) positionnable en relation de chevauchement avec l'ouverture centrale (66), dans lequel la grille (62) inclut une pluralité d'éléments lames (72) et une pluralité d'ouvertures (68) sont définies entre la pluralité d'éléments lames (72), la pluralité d'ouvertures (68) étant agencées en communication fluidique avec l'ouverture centrale (66) ;
dans lequel la pluralité d'ouvertures (68) définissent une zone d'entrée et la zone d'entrée est variable ; et
dans lequel la pluralité d'éléments lames (72) sont mobiles entre une première position et une seconde position ;
l'ensemble couvercle (40) étant **caractérisé par** un système de commande (80) incluant :
un mécanisme d'actionnement (82) couplé à au moins un de la pluralité d'éléments lames (72) ;
un ou plusieurs capteurs (S) associé(s) avec la grille (62) et configuré(s) pour surveiller une position réelle de la pluralité d'éléments lames (72) ; et
un dispositif de commande (86) couplé de manière opérationnelle au mécanisme d'actionnement (82) ;
dans lequel le dispositif de commande (86) est configuré pour :
communiquer un ordre de déplacement associé au au moins un de la pluralité d'éléments lames (72) au mécanisme d'actionnement (82) ;
comparer la position réelle de la pluralité d'éléments lames (72) à une position ordonnée ;
déterminer une valeur d'erreur sur la base de la comparaison ; et
émettre une position ordonnée corrigée lorsque la valeur d'erreur dépasse un seuil prédéterminé.

2. Ensemble couvercle (40) selon la revendication 1, dans lequel chacun de la pluralité d'éléments lames (72) est rotatif autour d'un axe (X) respectif entre la première position et la seconde position.

3. Ensemble couvercle (40) selon la revendication 1 ou 2, dans lequel la zone d'entrée est maximisée lorsque la pluralité d'éléments lames (72) sont dans la première position.

4. Ensemble couvercle (40) selon la revendication 3, dans lequel la pluralité d'éléments lames (72) s'étendent généralement perpendiculairement à une surface de l'ensemble d'entourage (60) lorsqu'ils sont dans la première position.

5. Ensemble couvercle (40) selon une quelconque revendication précédente, dans lequel la zone d'entrée est minimisée lorsque la pluralité d'éléments lames (72) sont dans la seconde position.

6. Ensemble couvercle (40) selon une quelconque revendication précédente, dans lequel la pluralité d'éléments lames (72) s'étendent généralement parallèlement à une surface de l'ensemble d'entourage (60) lorsqu'ils sont dans la première position.

7. Ensemble couvercle (40) selon une quelconque revendication précédente, dans lequel la pluralité d'ouvertures (68) sont complètement scellées lorsque la pluralité d'éléments lames (72) sont dans la seconde position.

8. Ensemble couvercle (40) selon une quelconque revendication précédente, dans lequel entre environ 10 % et 20 % de l'ouverture centrale (66) est agencé en communication fluidique avec la pluralité d'ouvertures (68) lorsque la pluralité d'éléments lames (72) sont dans la seconde position.

9. Ensemble couvercle (40) selon une quelconque revendication précédente, dans lequel la grille (62) comprend en outre un support central (76) et une première pluralité d'éléments lames s'étendent à partir du support central (76) dans une première direction et une seconde pluralité d'éléments lames s'étendent à partir du support central (76) dans une seconde direction.

10. Unité de réfrigération de transport (34) comprenant :
un échangeur de chaleur condenseur ; et
un ensemble couvercle (40) en relation de chevauchement avec l'échangeur de chaleur condenseur, dans lequel l'ensemble couvercle (40) définit une zone d'entrée à travers laquelle de l'air est fourni à l'échangeur de chaleur condenseur, dans lequel la zone d'entrée est variable,
dans lequel l'ensemble couvercle (40) est tel que défini dans une quelconque revendication précédente.

11. Unité de réfrigération de transport (34) selon la revendication 10, dans laquelle la zone d'entrée est variable en réponse à une demande de l'unité de réfrigération de transport (34).

12. Procédé de fonctionnement d'une unité de réfrigération de transport (34) comprenant :
la fourniture d'un ensemble d'entourage (60) présentant une ouverture centrale (66) ; et
la fourniture d'une grille (62) en relation de chevauchement avec l'ouverture centrale (66), la grille (62) incluant une pluralité d'éléments lames (72) qui définissent une zone d'entrée ; et
la variation de la zone d'entrée de la grille (62) sur la base d'une demande de l'unité de réfrigération de transport (34) ;
le procédé comprenant l'utilisation d'un ensemble couvercle tel que défini dans l'une quelconque des revendications 1 à 9.

13. Procédé selon la revendication 12, dans lequel la variation de la zone d'entrée de la grille (62) comprend en outre le déplacement de la pluralité d'éléments lames (72) vers une position ouverte pour augmenter la zone entrée et un flux d'air fourni à l'unité de réfrigération de transport (34) en réponse à une augmentation de la demande.

14. Procédé selon la revendication 12 ou 13, dans lequel la variation de la zone d'entrée de la grille (62) comprend en outre le déplacement de la pluralité d'éléments lames (72) vers une position fermée pour réduire la zone entrée et un flux d'air fourni à l'unité de réfrigération de transport (34) en réponse à une réduction de la demande.
